# EUROPEAN PATENT SPECIFICATION

(11) **EP 4 160 620 B1**
(45) Date of publication and mention of the grant of the patent: **25.06.2025**
(21) Application number: 20937986.6
(22) Date of filing: 04.08.2020
(51) Int. Cl.: G21F 5/12, F16B 5/02

(54) **SPENT NUCLEAR FUEL CANISTER HAVING IMPROVED HOUSING PROPERTY**
KANISTER FÜR VERBRAUCHTEN KERNBRENNSTOFF MIT VERBESSERTER GEHÄUSEEIGENSCHAFT
CARTOUCHE DE COMBUSTIBLE NUCLÉAIRE USÉ À PROPRIÉTÉ DE LOGEMENT AMÉLIORÉE

(30) Priority: 27.05.2020 KR 20200063669
(43) Date of publication of application: 05.04.2023
(73) Proprietor: Korea Radioactive Waste Agency, Gyeongju-si, Gyeongsangbuk-do 38062 (KR)
(72) Inventor: KIM, Seung Hyun, Daejeon 34169 (KR); KIM, Min Seok, Daejeon 35245 (KR); LEE, Sang Hwan, Daejeon 34018 (KR); SHIN, Chang Min, Daejeon 34075 (KR); YUN, Hyung Ju, Daejeon 34070 (KR); HAN, Man Ho, Daejeon 35336 (KR)
(74) Representative: Kraus & Lederer PartGmbB
(86) International application number: PCT/KR2020/010249
(87) International publication number: WO 2021/241800

(56) References cited:
- JP-A- 2003 172 794
- KR-A- 20130 095 402
- KR-A- 20190 142 222
- KR-B1- 101 750 330
- US-A- 4 893 022
- US-A- 5 391 887
- US-B2- 7 194 060
- US-B2- 8 187 720

## Description

### [Technical Field]

The present disclosure relates to a spent nuclear fuel canister having improved housing property, and more particularly, to a spent nuclear fuel canister having improved housing property while being free from a welding process.

### [Background Art]

A container capable of storing spent nuclear fuel is formed of a metal canister in a form of a barrel, and a basket is provided inside the metal canister to store the spent nuclear fuel. The basket inside the metal canister is fixed through a support member, a housing member, or the like, and a neutron shielding body is provided outside the canister to store the spent nuclear fuel.

The canister material is mainly stainless steel, and includes a canister shell enclosing a side surface of the basket, a canister lid plate enclosing an upper end of the basket, and a canister bottom plate enclosing a lower end of the basket. After the spent nuclear fuel is charged into the basket, the canister lid plate is fixed to the canister shell by a bolt-nut connection and sealed by welding.

These welded portion (welded zone and heat affect zone) and bolt-nut connection zone are vulnerable to corrosion cracks and are factors that impair the integrity of a spent nuclear fuel dry storage system, and the welding process involving heat is a process with a very high risk factor in a dry storage process of spent nuclear fuel where the temperature should be strictly controlled.

### [Disclosure]

### [Technical Problem]

An object of the present disclosure is to provide a spent nuclear fuel canister that is free from welding and furthermore, does not require external fastening parts such as bolt-nut.

Another object of the present disclosure is to provide a spent nuclear fuel canister that is free from welding and has improved housing properties.

still another object of the present disclosure is to provide a spent nuclear fuel canister having improved corrosion resistance.

### [Technical Solution]

In one general aspect, a spent nuclear fuel canister may include: a main body having one end that is opened and an internal space in which the spent nuclear fuel is mounted; a cover mounted on the opened one end of the main body and fixed to the main body; a first screw ridge formed on an inner side surface at one end of the main body; and a second screw ridge located on an outer side surface of the cover and configured to be fastened with the first screw ridge due to a rotation of the cover.

Coefficients of thermal expansion of the first screw ridge and the second screw ridge are greater than those of the main body and the cover, respectively.

The first screw ridge and the second screw ridge may contain a metal having a face-centered cubic (FCC) structure.

An amorphous alloy layer may be located between the main body and the first screw ridge or between the cover and the second screw ridge.

An amorphous alloy of the amorphous alloy layer may have a glass transition temperature of 450 °C or higher.

The first screw ridge may have wave pattern irregularities on a cross-section basis, and the second screw ridge may have wave pattern irregularities having a complementary shape to engage with the wave pattern irregularities of the first screw ridge.

The spent nuclear fuel canister may further include at least an anti-corrosion coating layer coated on an outer surface of the main body and an outer surface of the cover, respectively.

The anti-corrosion coating layer may include a nickel-based, aluminum-based, or magnesium-based amorphous alloy.

The main body may include grooves spaced apart from each other on an outer surface thereof, and the grooves are filled with an amorphous alloy of the anti-corrosion coating layer.

The first screw ridge may swirl the main body 2 to 10 times.

The cover may include a fastening part that has a side surface on which the second screw ridge is located, and charged into one end of the main body; and a cap part that extends from one end of the fastening part and covers an opened one end of the main body and an outer side surface of the opened one end.

The spent nuclear fuel canister may further include a basket located in the internal space of the main body.

The main body and the cover may each be made of stainless steel.

The present disclosure includes a method of storing spent nuclear fuel using the above-described spent nuclear fuel canister.

The method of storing spent nuclear fuel includes: charging the spent nuclear fuel into the main body of the spent nuclear fuel canister described above; and fixing the cover to the main body by locating the cover on an opened one end of the main body and rotating the cover to fasten between the first screw ridge and the second screw ridge.

### [Advantageous Effects]

The spent nuclear fuel canister according to the present disclosure may be free from external fixing members such as bolt-nut connection and welding as the main body and the cover are coupled by fastening between screw ridges by rotation and the internal space of the main body is housed.

In addition, since the internal space of the main body is housed and opened only by the rotation of the cover, the process of transferring and storing the spent nuclear fuel and recovering the spent nuclear fuel stored in the canister can be performed very quickly and easily.

### [BRIEF DESCRIPTION OF THE DRAWINGS]

FIG. 1 is a perspective view of a canister according to an embodiment of the present disclosure, and is an example illustrating a state in which a main body and a cover are not coupled.
FIG. 2 is an enlarged view of a main body region and a cover region where a spiral ridge is located in a canister according to an embodiment of the present disclosure.
FIG. 3 is an example of a cross-sectional view of the canister according to an embodiment of the present disclosure in a state in which a cover and a main body are coupled.
FIG. 4 is another example of a cross-sectional view of the canister according to an embodiment of the present disclosure in a state in which the cover and the main body are coupled.

### [Best Mode]

Hereinafter, a spent nuclear fuel canister of the present disclosure will be described in detail with reference to the accompanying drawings. The drawings to be provided below are provided by way of example so that the the present disclosure can be sufficiently transferred to those skilled in the art. Therefore, the present disclosure is not limited to the accompanying drawings provided below, but may be modified in many different forms. In addition, the accompanying drawings suggested below will be exaggerated in order to clear the scope of the present disclosure. Technical terms and scientific terms used in the present specification have the general meaning understood by those skilled in the art to which the present disclosure pertains unless otherwise defined, and a description for the known function and configuration unnecessarily obscuring the gist of the present disclosure will be omitted in the following description and the accompanying drawings.

Also, the singular forms used in the specification and appended claims are intended to include the plural forms as well, unless the context specifically dictates otherwise.

In this specification and the appended claims, terms such as first, second, etc. are used for the purpose of distinguishing one component from another component, not in a limiting sense.

In this specification and the appended claims, the terms "include" or "have" means that a feature or element described in the specification is present, and unless specifically limited, it does not preclude in advance the possibility that one or more other features or components may be added.

In this specification and the appended claims, when a part of a film (layer), a region, a component, etc., is on or above another part, this includes not only the case where the part is in contact with and directly on another part, but also the case where another film (layer), other regions, other components, etc., are also interposed therebetween.

A spent nuclear fuel canister includes: a main body having one end that is opened and an internal space in which the spent nuclear fuel is mounted; a cover mounted on the opened one end of the main body and fixed to the main body; a first screw ridge formed on an inner side surface at one end of the main body; and a second screw ridge located on an outer side surface of the cover and configured to be fastened with the first screw ridge due to a rotation of the cover.

The spent nuclear fuel canister according to the present disclosure may be free from external fixing members such as bolt-nut connection and welding as the main body and the cover are coupled by fastening between screw ridges by rotation and the internal space of the main body is housed. Also, the internal space of the main body may be housed and opened only by the rotation of the cover. Accordingly, the process of charging and storing the spent nuclear fuel in the canister is simpler and quicker, and if necessary, the internal space into which the spent nuclear fuel is charged may be opened by simply rotating the cover in the direction in which the screw ridge is unfastened.

As the welding process is a process involving heat, a heat affect zone is inevitably generated around the welded portion. This heat affect zone causes the formation of unwanted precipitates in a base material of the canister and the resulting change in composition, and thus the corrosion resistance of the canister may be greatly reduced. Furthermore, dry storage of spent nuclear fuel should be performed according to known safety regulatory evaluation items, and the temperature should be strictly maintained below 400 ° C in the entire process of dry storage of spent nuclear fuel. The welding process involving heat under these temperature conditions is known to be a very dangerous and demanding process in the dry storage processes. In addition, the bolt-nut connection causes local stress concentration in the bolt-nut connection zone of the canister, and there is a risk of stress corrosion cracking in the bolt-nut connection zone.

According to the present disclosure, as the main body and the cover are coupled by the fastening between the screw ridges, it is free from external fixing members such as the welding process or bolt-nut, so it is possible to improve the stability of the dry storage process of the spent nuclear fuel, and prevent the canister corrosion resistance from being damaged.

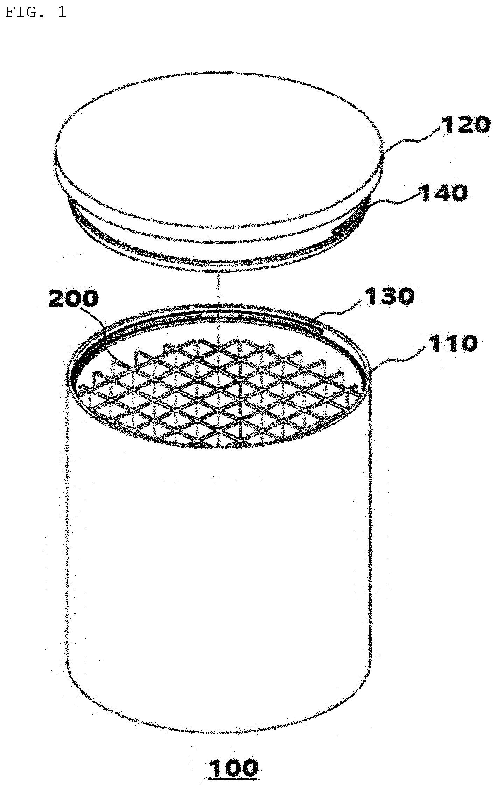

FIG. 1 is a perspective view of a canister 100 according to an embodiment of the present disclosure, and is an example illustrating a state in which a main body 110 and a cover 120 are not coupled.

As in the example illustrated in FIG. 1, the canister 100 includes a main body 110 having one end that is opened and an internal space, a cover 120, a first screw ridge 130, and a second screw ridge 140.

The main body 110 may include a side wall and a bottom surface, and the side wall and the bottom surface may be integrally connected (extend) to each other. The shape of the main body 110 is not particularly limited, but may be cylindrical. At least one end region of the cover 120 has a shape corresponding to that of the main body 110, so one end region may be inserted into the opened one end of the main body 110.

One end of the main body 110, specifically, the first screw ridge 130 is located on an inner side surface of the opened one end, and a second screw ridge 140 formed to be fastened with the first screw ridge 130 by the rotation of the cover 120 is located on an outer side surface of one end region inserted into the main body 110. In this case, of course, the inner side surface of the opened one end and the outer side surface of the cover 120 face each other when the main body and the cover are coupled.

As described above, the main body 110 and the cover 120 may be coupled and fixed to each other by fastening between the first screw ridge 130 and the second screw ridge 140. The first screw ridge 130 may have a shape that winds around the inner side surface of the opened one end of the main body in a longitudinal direction (direction from the opened one end to the bottom surface) of the main body. In addition, based on an imaginary plane parallel to the bottom surface of the main body 110, an angle between the first screw ridge 130 and the imaginary plane may be 5 to 20°, but is not necessarily limited thereto. It is sufficient if the second screw ridge 140 is formed to be fastened with the first screw ridge 130 by the rotation of the cover 120, specifically clockwise rotation.

The fastening between these screw ridges may not only secure appropriate housing properties, but also provide a longer material diffusion (movement) distance than any other combination when flowing in or out of a fluid material including gas, so it is possible to effectively prevent the fluid material outside the canister from flowing into the internal space or fluid material of the internal space from flowing out to the outside of the canister.

In terms of providing the material diffusion (movement) distance that effectively prevents the fluid material from flowing in or flowing out and ensuring the convenience of an appropriate process (cover coupling process), the first screw ridge may swirl the main body 2 to 10 times, preferably 3 to 8 times, and more preferably 4 to 7 times. In this case, of course, the one-time reference may be based on one end of the screw ridge.

The spent nuclear fuel canister according to one embodiment may be a metal canister. The metal canister means that at least the main body, cover and screw ridge are each made of metal.

According to the invention, the coefficients of thermal expansion of the first screw ridge and the second screw ridge are greater than those of the main body and the cover, respectively. That is, the first screw ridge and the second screw ridge are made of a material that is different from the material of the main body and the cover and has the coefficient of thermal expansion greater than those of the main body and the cover. More specifically, the main body and the cover may be made of the same first metal material, and the first screw ridge and the second screw ridge may be made of the same second metal material, but the second metal material would have the rate of thermal expansion (coefficient of thermal expansion) greater than that of the first metal material.

After the spent nuclear fuel is charged into the canister and housed with a cover, the canister charged with the spent nuclear fuel is stored at a temperature lower than a prescribed temperature limit (e.g., 400°C). When the first screw ridge and the second screw ridge have a rate of thermal expansion greater than those of the main body and the cover, the first screw ridge and the second screw ridge may be expanded due to the heat generated by the spent nuclear fuel during the storage of the spent nuclear fuel and may be physically strongly bound (adhered) to each other without gaps. Due to the expansion of the screw ridge, the housing property of the main body internal space may be further improved.

As described above, the canister according to one embodiment may not require a canister external coupling member such as a bolt-nut when coupling the main body and the cover, and may be free from welding, and when the first screw ridge and the second screw ridge have the coefficient of thermal expansion greater than those of the main body and the cover, the first screw ridge and the second screw ridge act as a mechanical fastener coupling between the main body and the cover, and at the same time, may perform a role similar to that of the sealing ring by the thermal expansion. Accordingly, the canister according to one embodiment does not require a member (for example, a sealing ring made of metal or elastomer, a metal gasket, etc.) for a separate sealing between the main body and the cover.

The material of the first screw ridge and the second screw ridge may be a metal having the rate of thermal expansion (coefficient of thermal expansion, based on 20°C) greater than those of the main body and cover. However, it is preferable that the material of the first screw ridge and the second screw ridge is a metal material of a face-centered cubic (FCC) structure having the coefficient of thermal expansion greater than those of the main body and the cover. As is known, the metal of the FCC structure has excellent ductility and is easily plastically deformed by stress. Accordingly, when the first screw ridge and the second screw ridge are made of the metal material of the FCC structure, the stress (stress generated by thermal expansion) that may remain even after securing housing properties by the expansion of the screw ridge may be relieved to a large extent by plastic deformation. In addition, it is advantageous in that adhesion between the first screw ridge and the second screw ridge may be further strengthened by easy plastic deformation due to stress.

In one embodiment, the main body and the cover may be made of stainless steel, specifically austenitic, duplex, ferritic or martensitic stainless steel, and more specifically austenitic stainless steel. As an example of a commercial product, the main body and the cover may be 316 series stainless steel. When the main body and the cover are made of stainless steel, the material of the first screw ridge and the second screw ridge may be metal having the FCC structure in which the coefficient of thermal expansion (based on 20°C) is 18 x 10⁻⁶/K or greater, specifically 18 x 10⁻⁶/K to 35 x 10⁻⁶/K, more specifically 19 x 10⁻⁶/K to 30 x 10⁻⁶/K, and still more specifically 20 x 10⁻⁶/K to 30 x 10⁻⁶/K. When the main body and the cover are made of stainless steel, examples of the metal having the FCC structure having the coefficient of thermal expansion greater than those of the main body and the cover may include copper, aluminum, lead, silver, alloys thereof, composites thereof, etc., but the present disclosure is not limited thereto.

When the first screw ridge and the second screw ridge have the coefficient of thermal expansion greater than those of the main body and the cover, it is preferable that the amorphous alloy layer is located between the first screw ridge and the inner side surface of the main body and between the second screw ridge and the outer side surface of the cover, respectively. The amorphous alloy layer may serve to bind (attach) the first screw ridge to the main body or the second screw ridge to the cover. The binding between the screw ridge and the main body or the cover by the amorphous alloy layer may be performed by heating the amorphous alloy located between the screw ridge and the main body or the cover to a temperature equal to or higher than a glass transition temperature (Tg) of the amorphous alloy and a temperature lower than the crystallization start temperature. When the amorphous alloy is heated to a temperature equal to or higher than the glass transition temperature and a temperature lower than the crystallization start temperature and used as an adhesive, it is advantageous not only to strongly bind the screw ridge to the main body or the cover, but also to minimize the stress remaining on the interface (interface layer) between the screw ridge and the main body or the cover. At this time, since the amorphous alloy is heated to a temperature equal to or higher than the glass transition temperature (Tg) and a temperature lower than the crystallization start temperature and then cooled, the amorphous alloy is not crystallized and maintains the amorphous phase as it is, so the interfacial layer of the amorphous alloy layer may be formed on the interface between the screw ridge and the main body or the cover.

In addition, when the amorphous alloy layer is located between the first screw ridge and the main body and between the second screw ridge and the cover, respectively, it is possible to minimize the stress of the interface layer remaining due to the attachment of the screw ridge and relieve the stress caused by the difference in the rate of thermal expansion between the screw ridge and the main body or the cover by the amorphous alloy layer. In detail, the thin amorphous alloy layer may have high elasticity properties comparable to that of flexible polymers. It is possible to relieve the stress caused by the difference in the rate of thermal expansion between the screw ridge and the main body and between the screw ridge and the cover due to its own low rate of thermal expansion and high elasticity properties. The durability of the canister may be improved by relieving the stress. In terms of stably exhibiting the high elasticity properties of the amorphous alloy layer, the thickness of the amorphous alloy layer may be 500 µm or less, specifically 400 µm or less, more specifically 10 to 300 µm, and still more specifically 50 to 200 µm.

The amorphous alloy of the amorphous alloy layer is not greatly limited, but may be Mg-based, Ca-based, Al-based, Ti-based, Zr-based, Hf-based, Fe-based, Co-based, Ni-based, Cu-based amorphous alloy, etc., based on the metal with the highest element ratio among the binary or ternary or more multi-component amorphous alloys.

However, as it is advantageous for the amorphous alloy of the amorphous alloy layer to have the glass transition temperature higher than the defined temperature limit (e.g., 400°C) during the dry storage of the spent nuclear fuel using a canister, the amorphous alloy of the amorphous alloy layer may have a glass transition temperature of 450°C or higher, specifically 450 to 950°C, more specifically 450°C to 750°C, and still more specifically 450°C to 600°C. Examples of the amorphous alloy having the glass transition temperature of 450°C or higher include Fe-based amorphous alloys (e.g., Fe-Co-Cr-Mo-C-B-Y alloy, Fe-Si-B-P alloy, Fe-Y-B alloy, etc.), Ni-based amorphous alloys (e.g., Ni-Nb-Ta alloy, Ni-Nb-Ti-Hf alloy, Ni-Zr-Ti-Sn alloy, Ni-Nb-Ti-Hf alloy, etc.), Cu-based amorphous alloys (e.g., Cu-Zr alloy, Cu-Ti-Zr-Ni alloy, Cu-Hf-Al alloy, Cu-Zr-Al alloy, Cu-Zr-Al-(Y, Ag, Be) alloy etc), Al-based amorphous alloys (e.g., Al-La-Y-Ni alloy, etc.), Mg-based amorphous alloys (Mg-Ni-Nd alloy, etc.), Zr-based amorphous alloys (Zr-Al-Ni alloy, Zr-Al-Cu-Ni alloy, Zr-Be-Cu-Ni-Ti alloy, Zr-Al-Co alloy, Zr-Cu-Al-Ge-Be alloy, etc.) etc., but are not necessarily limited thereto.

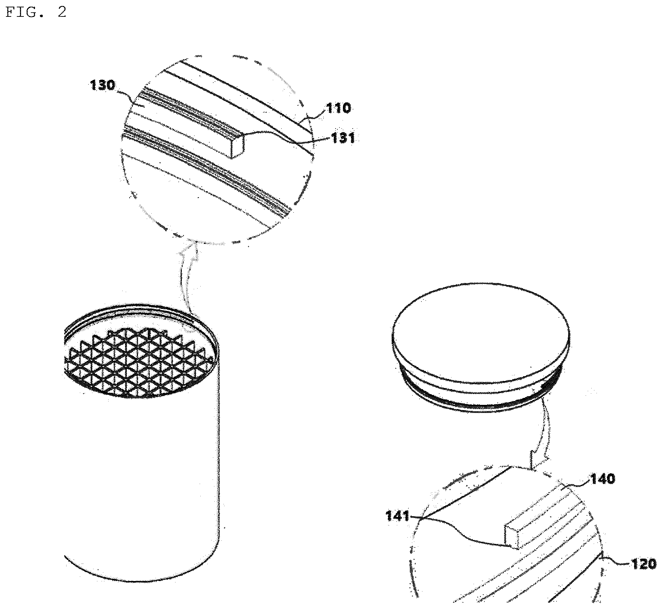

FIG. 2 is a partially enlarged view of the screw ridge 130 located in the main body 110 of the canister and the screw ridge 140 located in the cover 120 according to an embodiment of the present disclosure. As in the example illustrated in FIG. 2, the first screw ridge 130 may have wave pattern irregularities 131 based on its cross section (cross section perpendicular to the longitudinal direction of the spiral), and the second screw ridge 140 may have wave pattern irregularities 141 having a complementary shape to engage with the wave pattern irregularities 131 of the first screw ridge.

In this case, the wave pattern irregularities 131 may be continuously formed from one end to the other end of the first screw ridge 130, and the wave pattern irregularities 141 (irregularities having a complementary shape to the irregularities formed on the first screw ridge) may be continuously formed from one end to the other end of the second screw ridge 140.

In this case, for clarity of recognition, an example in which the first screw ridge and the second screw ridge have a rectangular shape based on a cross-section is illustrated, but the shape of the first screw ridge and the second screw ridge based on the cross-section is not limited thereto, and may have various shapes such as a quadrangle (rectangle or regular square), a truncated ellipse, a truncated circle, a triangle, a square with rounded corners (rectangle to regular square), and a triangle with rounded corners.

As in the example of FIG. 2, in the case where the wave pattern irregularities are formed on the first screw ridge and the second screw ridge has complementary wave pattern irregularities to engage with these irregularities, when the cover is fastened with the main body, the area (fastening area) where the first screw ridge and the second screw ridge are in contact with each other increases, which is advantageous in that the housing property of the internal space in the main body can be further improved.

In this case, as in the example illustrated in FIG. 2, the wave pattern irregularities may be formed on the surfaces where the first spiral ridge and the second spiral ridge face (contact) each other, respectively, but the present disclosure does not exclude the case where the wave pattern irregularities are formed on the entire surface of the spiral ridge.

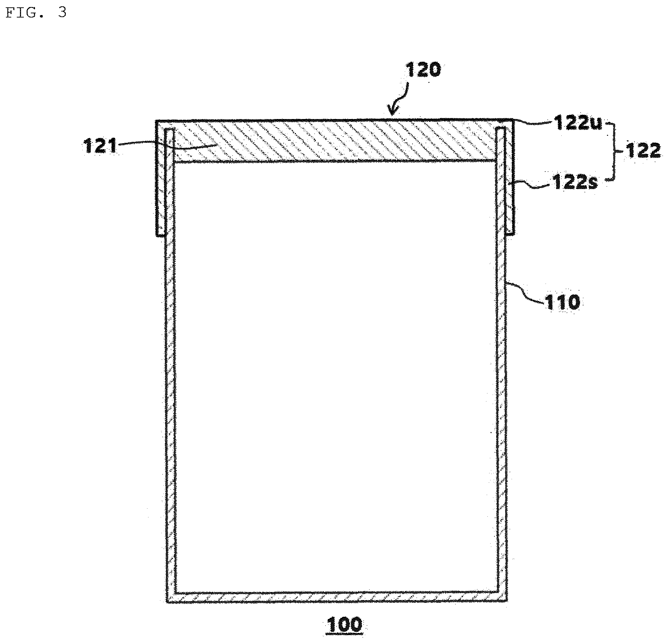

FIG. 3 is an example of a cross-sectional view of the canister according to an embodiment of the present disclosure in the state in which the cover 120 and the main body 110 are coupled. As in the example illustrated in FIG. 3, the cover 120 may include a fastening part 121 and a cap part 122. The fastening part 121 has (provides) a side surface where the second screw ridge 140 is located, and when the cover 120 rotates, may be the cover region that is inserted into the main body through the opened one end of the main body 110 by fastening between the screw ridges . Accordingly, the fastening part 121 may have a shape corresponding to the empty space of the opened one end region of the main body.

The cap part 122 may include an upper plate 122u integrally extending with one end (upper end) opposite to one end (lower end) of the fastening part 121, specifically, one end (lower end) inserted into the main body 110 and a side plate 122s that extends from the edge of the upper plate 122u in a downward direction (the direction where the fastening part is located) and encloses around the top plate 122u. By these upper plate 122u and side plate 122s, when the cover is coupled to the main body, the cap part 122 may cover the opened one end of the main body 110 by the top plate 122u, and may be in close contact with the outer side surface of the opened one end of the main body 110 by the side plate 122s to cover the outer side surface.

When the cover 120 includes the above-described fastening part 121 and the cap part 122, the housing property of the internal space is secured even by the adhesion between the outer side surface of the main body 110 and the cap part 122 as well as the fastening of the first screw ridge 130 and the second screw ridge 140, so it is possible to improve the housing property of the canister. In addition, the fastened portion between the first screw ridge 130 and the second screw ridge 140 may be protected from the outside by the adhesion between the outer side surface of the main body 110 and the cap part 122, so it is possible to prevent the fastened portion from corroding.

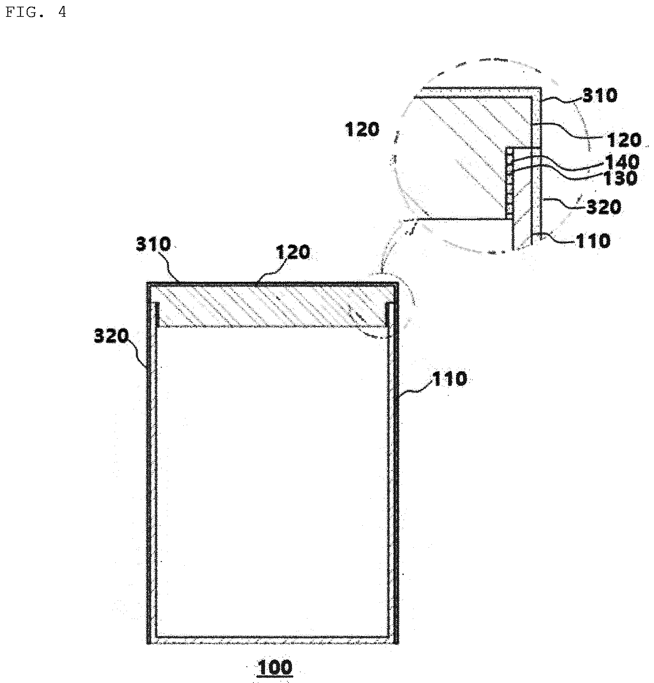

FIG. 4 is a cross-sectional view of a cross-section of the canister (state in which the main body and the cover are coupled) and the enlarged cross-section of a coupling zone between spiral ridges according to an embodiment of the present disclosure. As in the example illustrated in FIG. 4, the canister may further include anti-corrosion coating layers 310 and 320 coated on at least the outer side surface of the main body 110 and the outer side surface of the cover 120, respectively. The anti-corrosion coating layers 310 and 320 may be nickel-based, aluminum-based, or magnesium-based amorphous alloy layers, substantially nickel-based (for example, Ni-Nb-Ta alloy, Ni-Nb-Ti-Hf alloy, Ni-Zr-Ti-Sn alloy, Ni-Nb-Ti-Hf alloy, etc.) alloy layers having a glass transition temperature of 400°C or higher, aluminum-based (e.g., Al-La-Y-Ni alloy, etc.) alloy layers, or magnesium-based (Mg-Ni-Nd alloy, etc.) amorphous alloy layers. The Nickel-based, aluminum-based, or magnesium-based amorphous alloys exhibit passivation behavior (passivation film formation) in an amorphous state, resulting in having excellent corrosion resistance compared to crystalline metals, and maintaining excellent corrosion resistance even under stress applied conditions. Advantageously, the thickness of the anticorrosion coating layer, which is the amorphous alloy layer, may be 500 µm or less, specifically 50 to 450 µm, and more specifically 100 to 400 µm. The anti-corrosion coating layer (amorphous alloy layer) of this thickness may exhibit high elasticity properties, resulting in effectively absorbing and relieving the stress caused by the coating layer due to thermal expansion of the main body or the cover during the dry storage of the spent nuclear fuel, and preventing the delamination between the coating layer and the main body (or cover).

In addition, the main body may include grooves spaced apart from each other on its outer surface, and the grooves on the surface of the main body may be filled with the amorphous alloy of the anti-corrosion coating layer. In this case, the depth (maximum depth) of the surface grooves may be 5 to 50%, and specifically 10 to 30% of the thickness of the coating layer so that the surface grooves may be filled without changing the thickness of the anticorrosive coating layer. The width of the surface groove is not particularly limited, but may be 0.5 to 100 times the thickness of the coating layer. Although not particularly limited, the surface groove may be formed to cross the main body in the height direction (direction from the bottom of the main body to the opened one end) of the main body, and may be spaced apart from each other perpendicular to the height direction (circumferential direction). The density of the surface grooves may be 10² to 10³/m per unit length in the separation direction between the surface grooves, but is not limited thereto.

Since the amorphous alloy has a very low rate of thermal expansion, the compressive force may be applied to the coating layer region filled in the surface grooves due to the thermal expansion of the main body during dry storage of spent nuclear fuel, and the tensile force may be applied to the coating layer region other than the surface grooves. As the coating layer is in the form of a continuous film with high elasticity property, the tensile force and the compressive force caused by the main body in the coating layer may partially offset each other, thereby reducing the net stress that the coating layer should relieve by elastic deformation.

The canister according to one embodiment may further include a basket 200 for fixing the spent nuclear fuel charged into the main body internal space, as in the example illustrated in FIG. 1. Accordingly, the basket 200 may be located in the internal space of the main body 110 and may have a typical structure used to fix the spent nuclear fuel in the canister in the field of the dry storage of the spent nuclear fuel. For example, as in the example illustrated in FIG. 1, the basket 200 may have a rectangular lattice structure, and may have a shape in which a plurality of rectangular tubes extending in the longitudinal direction are gathered. In this case, the spent nuclear fuel may be located inside each of the rectangular square tubes. In addition, it goes without saying that the canister may further include a support member for fixing and supporting the basket or a housing member into which the basket is inserted together with the basket.

In one embodiment, the canister may be a container for the dry storage of the spent nuclear fuel, and may be a container for transporting, storing, or transporting and storing the spent nuclear fuel.

The present disclosure includes a method of storing spent nuclear fuel using the above-described spent nuclear fuel canister.

The method of storing spent nuclear fuel according to the present disclosure includes charging (inserting) the spent nuclear fuel into the main body of the spent nuclear fuel canister described above, specifically, into a basket inside the main body; and fixing the cover to the main body by locating the cover on an opened one end of the main body and rotating the cover to fasten between the first screw ridge and the second screw ridge. In this case, the rotation is, of course, rotation in the direction in which the first screw ridge and the second screw ridge are fastened.

In the storage method according to the present disclosure, as the cover is fixed to the main body by coupling between the screw ridges by the rotation of the cover and the canister is housed, the process of fixing the cover using an external fixing member such as a bolt-nut and the process of fixing and sealing between the cover and the main body through the welding may be excluded.

In addition, the present disclosure includes a method of recovering stored spent nuclear fuel.

The method for recovering spent nuclear fuel according to the present disclosure includes opening the internal space of the main body by removing the cover from the main body by rotating the cover of the canister in which the spent nuclear fuel is internally stored in a direction in which the fastening between the screw ridges is released; and taking the spent nuclear fuel located inside the main body, specifically in the basket within the main body out of the main body and recovering the spent nuclear fuel.

The recovery method according to the present disclosure does not require the removal of the external fixing member or the welded portion, and since the canister may be opened by simply rotating the cover, the spent nuclear fuel stored in the canister may be easily recovered if necessary. In addition, since no substantial damage occurs during the coupling and separation between the cover and the main body, after the spent nuclear fuel is recovered, the remaining canister may be reused for storing the spent nuclear fuel.

In this case, after the insertion of the spent nuclear fuel into the main body and the fixing of the cover are usually done underwater, a draining step for discharging water in the canister, a drying step, and atmosphere creating step for filling the inside of the canister with an inert gas such as helium may be performed. Accordingly, an exhaust port may be further provided in the cover and a drain port may be further provided in the lower part of the main body, and it goes without saying that the drain port may be kept airtight by a port cover or the like having a metal O-ring.

Hereinabove, although the present disclosure has been described by specific matters, exemplary embodiments, and drawings, they have been provided only for assisting in the entire understanding of the present disclosure. Therefore, the present disclosure is not limited to the exemplary embodiments. Various modifications and changes may be made by those skilled in the art to which the present disclosure pertains from this description.

The invention is defined by the appended claims.

## Claims

1. A spent nuclear fuel canister (100), comprising:
a main body (110) having one end that is opened and an internal space in which the spent nuclear fuel is mounted;
a cover (120) mounted on the opened one end of the main body (110) and fixed to the main body (110);
a first screw ridge (130) formed on an inner side surface at one end of the main body (110); and
a second screw ridge (140) located on an outer side surface of the cover (120) and
configured to be fastened with the first screw ridge (130) due to a rotation of the cover (120),
**characterised in that**
coefficients of thermal expansion of the first screw ridge (130) and the second screw ridge (140) are greater than those of the main body (110) and the cover (120), respectively.

2. The spent nuclear fuel canister (100) of claim 1, wherein the first screw ridge (130) and the second screw ridge (140) contain a metal having a face-centered cubic, FCC, structure.

3. The spent nuclear fuel canister (100) of claim 1, wherein an amorphous alloy layer is located between the main body (110) and the first screw ridge (130) or between the cover (120) and the second screw ridge (140).

4. The spent nuclear fuel canister (100) of claim 3, wherein an amorphous alloy of the amorphous alloy layer has a glass transition temperature of 450 °C or higher.

5. The spent nuclear fuel canister (100) of any of claims 1 to 4, wherein the first screw ridge (130) has wave pattern irregularities (131) on a cross-section basis, and the second screw ridge (140) has wave pattern irregularities (141) having a complementary shape to engage with the wave pattern irregularities (131) of the first screw ridge (130).

6. The spent nuclear fuel canister (100) of any of claims 1 to 5, further comprising at least an anti-corrosion coating layer (310, 320) coated on an outer surface of the main body (110) and an outer surface of the cover (120), respectively.

7. The spent nuclear fuel canister (100) of claim 6, wherein the anti-corrosion coating layer (310, 320) includes a nickel-based, aluminum-based, or magnesium-based amorphous alloy.

8. The spent nuclear fuel canister (100) of claim 7, wherein the main body (110) includes grooves spaced apart from each other on an outer surface thereof, and the grooves are filled with an amorphous alloy of the anti-corrosion coating layer (310, 320).

9. The spent nuclear fuel canister (100) of any of claims 1 to 8, wherein the first screw ridge (130) swirls the main body (110) 2 to 10 times.

10. The spent nuclear fuel canister (100) of any of claims 1 to 9, wherein the cover (120) includes a fastening part (121) that has a side surface on which the second screw ridge (140) is located, and charged into one end of the main body (110); and a cap part (122) that extends from one end of the fastening part (121) and covers an opened one end of the main body (110) and an outer side surface of the opened one end.

11. The spent nuclear fuel canister (100) of any of claims 1 to 10, further comprising:
a basket (200) located in the internal space of the main body (110).

12. The spent nuclear fuel canister (100) of any of claims 1 to 11, wherein the main body (110) and the cover (120) are each made of stainless steel.

13. A method of storing spent nuclear fuel, comprising:
charging the spent nuclear fuel into the main body (110) of the spent nuclear fuel canister (100) of any one of claims 1 to 12; and
fixing the cover (120) to the main body (110) by locating the cover (120) on an opened one end of the main body (110) and rotating the cover (120) to fasten between the first screw ridge (130) and the second screw ridge (140).

## Patentansprüche

1. Behälter (100) für verbrauchten Kernbrennstoff, umfassend:
einen Hauptkörper (110) mit einem Ende, das geöffnet ist, und einem Innenraum, in dem der verbrauchte Kernbrennstoff untergebracht ist;
eine Abdeckung (120), die auf dem geöffneten einen Ende des Hauptkörpers (110) angebracht und an dem Hauptkörper (110) befestigt ist;
einen ersten Schraubgrat (130), der an einer inneren Seitenfläche an einem Ende des Hauptkörpers (110) ausgebildet ist; und
einen zweiten Schraubgrat (140), der an einer äußeren Seitenfläche der Abdeckung (120) angeordnet und ausgestaltet ist, um mit dem ersten Schraubgrat (130) aufgrund einer Drehung der Abdeckung (120) befestigt zu werden,
**dadurch gekennzeichnet, dass**
Wärmeausdehnungskoeffizienten des ersten Schraubgrats (130) und des zweiten Schraubgrats (140) größer sind als diejenigen des Hauptkörpers (110) bzw. der Abdeckung (120).

2. Behälter (100) für verbrauchten Kernbrennstoff nach Anspruch 1, wobei der erste Schraubgrat (130) und der zweite Schraubgrat (140) ein Metall mit einer flächenzentrierten kubischen, FCC, Struktur aufweisen.

3. Behälter (100) für verbrauchten Kernbrennstoff nach Anspruch 1, wobei eine amorphe Legierungsschicht zwischen dem Hauptkörper (110) und dem ersten Schraubgrat (130) oder zwischen der Abdeckung (120) und dem zweiten Schraubgrat (140) angeordnet ist.

4. Behälter (100) für verbrauchten Kernbrennstoff nach Anspruch 3, wobei eine amorphe Legierung der amorphen Legierungsschicht eine Glasübergangstemperatur von 450 °C oder höher aufweist.

5. Behälter (100) für verbrauchten Kernbrennstoff nach einem der Ansprüche 1 bis 4, wobei der erste Schraubgrat (130) im Querschnitt Wellenmuster-Unregelmäßigkeiten (131) aufweist und der zweite Schraubgrat (140) Wellenmuster-Unregelmäßigkeiten (141) aufweist, die eine komplementäre Form haben, um mit den Wellenmuster-Unregelmäßigkeiten (131) des ersten Schraubgrats (130) in Eingriff zu gelangen.

6. Behälter (100) für verbrauchten Kernbrennstoff nach einem der Ansprüche 1 bis 5, ferner umfassend mindestens eine Antikorrosionsbeschichtung (310, 320), die auf eine äußere Fläche des Hauptkörpers (110) bzw. eine äußere Fläche der Abdeckung (120) aufgetragen ist.

7. Behälter (100) für verbrauchten Kernbrennstoff nach Anspruch 6, wobei die Antikorrosionsbeschichtung (310, 320) eine nickelbasierte, aluminiumbasierte oder magnesiumbasierte amorphe Legierung aufweist.

8. Behälter (100) für verbrauchten Kernbrennstoff nach Anspruch 7, wobei der Hauptkörper (110) an einer äußeren Fläche davon Nuten aufweist, die voneinander beabstandet sind, und die Nuten mit einer amorphen Legierung der Antikorrosionsbeschichtung (310, 320) gefüllt sind.

9. Behälter (100) für verbrauchten Kernbrennstoff nach einem der Ansprüche 1 bis 8, wobei der erste Schraubgrat (130) in dem Hauptkörper (110) 2- bis 10-mal kreist.

10. Behälter (100) für verbrauchten Kernbrennstoff nach einem der Ansprüche 1 bis 9, wobei die Abdeckung (120) ein Befestigungsteil (121), das eine Seitenfläche aufweist, auf der der zweite Schraubgrat (140) angeordnet ist, und in ein Ende des Hauptkörpers (110) eingebracht ist; und ein Kappenteil (122), das sich von einem Ende des Befestigungsteils (121) erstreckt und ein geöffnetes Ende des Hauptkörpers (110) und eine äußere Seitenfläche des geöffneten einen Endes abdeckt, aufweist.

11. Behälter (100) für verbrauchten Kernbrennstoff nach einem der Ansprüche 1 bis 10, ferner umfassend:
einen Korb (200), der in dem Innenraum des Hauptkörpers (110) angeordnet ist.

12. Behälter (100) für verbrauchten Kernbrennstoff nach einem der Ansprüche 1 bis 11, wobei der Hauptkörper (110) und die Abdeckung (120) jeweils aus rostfreiem Stahl hergestellt sind.

13. Verfahren zum Lagern von verbrauchtem Kernbrennstoff, umfassend:
Einfüllen des verbrauchten Kernbrennstoffs in den Hauptkörper (110) des Behälters (100) für verbrauchten Kernbrennstoff nach einem der Ansprüche 1 bis 12; und
Befestigen der Abdeckung (120) an dem Hauptkörper (110) durch Anordnen der Abdeckung (120) an einem geöffneten Ende des Hauptkörpers (110) und Drehen der Abdeckung (120), um sie zwischen dem ersten Schraubgrat (130) und dem zweiten Schraubgrat (140) zu befestigen.

## Revendications

1. Cartouche à combustible nucléaire épuisé (100), comprenant :
un corps principal (110) ayant une extrémité qui est ouverte et un espace interne dans lequel le combustible nucléaire épuisé est monté ;
un couvercle (120) monté sur l'extrémité ouverte précitée du corps principal (110) et fixé au corps principal (110) ;
un premier sillon de vis (130) formé sur une surface latérale interne au niveau d'une extrémité du corps principal (110) ; et
un second sillon de vis (140) localisé sur une surface latérale externe du couvercle (120) et conçu pour être attaché avec le premier sillon de vis (130) en raison d'une rotation du couvercle (120), **caractérisé en ce que**
les coefficients de dilatation thermique du premier sillon de vis (130) et du second sillon de vis (140) sont supérieurs à ceux du corps principal (110) et du couvercle (120), respectivement.

2. Cartouche à combustible nucléaire épuisé (100) selon la revendication 1, dans laquelle le premier sillon de vis (130) et le second sillon de vis (140) contiennent un métal ayant une structure cubique à faces centrées, FCC.

3. Cartouche à combustible nucléaire épuisé (100) selon la revendication 1, dans laquelle une couche d'alliage amorphe est localisée entre le corps principal (110) et le premier sillon de vis (130) ou entre le couvercle (120) et le second sillon de vis (140).

4. Cartouche à combustible nucléaire épuisé (100) selon la revendication 3, dans laquelle un alliage amorphe de la couche d'alliage amorphe a une température de transition vitreuse de 450 °C ou plus élevée.

5. Cartouche à combustible nucléaire épuisé (100) selon l'une quelconque des revendications 1 à 4, dans laquelle le premier sillon de vis (130) a des irrégularités à motif de vague (131) en fonction de la section transversale, et le second sillon de vis (140) a des irrégularités à motif de vague (141) ayant une forme complémentaire pour venir en prise avec les irrégularités à motif de vague (131) du premier sillon de vis (130).

6. Cartouche à combustible nucléaire épuisé (100) selon l'une quelconque des revendications 1 à 5, comprenant en outre au moins une couche de revêtement anticorrosion (310, 320) revêtue sur une surface externe du corps principal (110) et une surface externe du couvercle (120), respectivement.

7. Cartouche à combustible nucléaire épuisé (100) selon la revendication 6, dans laquelle la couche de revêtement anticorrosion (310, 320) comporte un alliage amorphe à base de nickel, à base d'aluminium ou à base de magnésium.

8. Cartouche à combustible nucléaire épuisé (100) selon la revendication 7, dans laquelle le corps principal (110) comporte des rainures espacées les unes des autres sur une surface externe de celui-ci, et les rainures sont remplies d'un alliage amorphe de la couche de revêtement anticorrosion (310, 320).

9. Cartouche à combustible nucléaire épuisé (100) selon l'une quelconque des revendications 1 à 8, dans laquelle le premier sillon de vis (130) entoure le corps principal (110) 2 à 10 fois.

10. Cartouche à combustible nucléaire épuisé (100) selon l'une quelconque des revendications 1 à 9, dans laquelle le couvercle (120) comporte une partie d'attache (121) qui a une surface latérale sur laquelle le second sillon de vis (140) est localisé, et est insérée dans une extrémité du corps principal (110) ; et une partie de coiffe (122) qui s'étend à partir d'une extrémité de la partie d'attache (121) et couvre une extrémité ouverte du corps principal (110) et une surface latérale externe de l'extrémité ouverte précitée.

11. Cartouche à combustible nucléaire épuisé (100) selon l'une quelconque des revendications 1 à 10, comprenant en outre :
un panier (200) localisé dans l'espace interne du corps principal (110).

12. Cartouche à combustible nucléaire épuisé (100) selon l'une quelconque des revendications 1 à 11, dans laquelle le corps principal (110) et le couvercle (120) sont fabriqués chacun en acier inoxydable.

13. Procédé de stockage de combustible nucléaire épuisé, comprenant :
le chargement du combustible nucléaire épuisé dans le corps principal (110) de la cartouche à combustible nucléaire épuisé (100) selon l'une quelconque des revendications 1 à 12 ; et
la fixation du couvercle (120) au corps principal (110) en localisant le couvercle (120) sur une extrémité ouverte du corps principal (110) et en mettant en rotation le couvercle (120) pour l'attacher entre le premier sillon de vis (130) et le second sillon de vis (140).
